# EUROPÄISCHE PATENTSCHRIFT

(11) **EP 1 926 540 B1**
(45) Veröffentlichungstag und Bekanntmachung des Hinweises auf die Patenterteilung: **16.09.2009**
(21) Anmeldenummer: 06762678.8
(22) Anmeldetag: 19.07.2006
(51) Int. Cl.: B01D 29/15, B01D 35/147

(54) **FILTERVORRICHTUNG**
FILTER DEVICE
DISPOSITIF FILTRANT

(30) Priorität: 21.09.2005 DE 102005045012
(43) Veröffentlichungstag der Anmeldung: 04.06.2008
(73) Patentinhaber: HYDAC FILTERTECHNIK GMBH, 66280 Sulzbach/Saar (DE)
(72) Erfinder: LAUER, Viktor, 66809 Nalbach (DE)
(74) Vertreter: Bartels, Martin Erich Arthur
(86) Internationale Anmeldenummer: PCT/EP2006/007075
(87) Internationale Veröffentlichungsnummer: WO 2007/033716

(56) Entgegenhaltungen:
- EP-A- 1 163 039
- EP-A- 1 259 304
- DE-A1- 19 527 843
- US-A- 4 065 276

## Beschreibung

Die Erfindung betrifft eine Filtervorrichtung gemäß der Merkmalsausgestaltung des Oberbegriffes des Patentanspruches 1.

Dahingehende Filtervorrichtungen sind in einer Vielzahl von Ausführungsformen auf dem Markt frei erhältlich. Der Aufbau der Filterelemente, bestehend aus Filtermaterial und Stützrohr variiert von Hersteller zu Hersteller. Bei einfachen Papierelementen sind die Filtermaterialien ohne unterstützende Drahtgewebe hergestellt, so dass bei höheren Differenzdrücken an den Filterelementen die Filterfalten zusammengepreßt werden. Dadurch wird die Drainagemöglichkeit bei den derart aufgefalteten Filtermaterialien verkleinert, so dass demgemäß viele Falten für die Filtration ungenützt bleiben. Demgegenüber haben höherwertige Elemente einen mehrlagigen Filtermaterialaufbau. Hieraus ergibt sich eine höhere Beständigkeit der Elemente gegenüber auftretenden Druckspitzen bei der Filtration und wechselnden Volumenströmen.

Ist das Filterelement verbraucht, was regelmäßig der Fall ist, wenn das Filtermaterial von Verschmutzungen zugesetzt ist, wird dieses im Gehäuse gegen ein neues Filterelement getauscht. Bei den bekannten Lösungen ist dann das Filterelement als Ganzes zu entsorgen, wobei im Stand der Technik schon Vorschläge gemacht wurden, Teile des Filterelementes zu recyceln oder dieses als Ganzes thermisch zu veraschen. Bei den dahingehenden Lösungen wird das Stützrohr gleichfalls dergestalt mit entsorgt, obwohl dieses unmittelbar oder entsprechend abgereinigt an sich wieder zum Einsatz gebracht werden könnte. Das entsprechende Entsorgen des gesamten Filterelementes ist insoweit dann kostenintensiv und erhöht auch entsprechend die Abfallmenge.

Durch die EP-A-1 163 039 ist ein Filter, insbesondere Luftfilter, für die Ansaugluft von Brennkraftmaschinen bekannt, umfassend ein topfförmiges Gehäuse mit einem Einlaß und einem Auslaß für das zu filternde Medium, wobei das Gehäuse aus mindestens zwei Gehäuseschalen besteht, und mit einer konisch ausgebildeten Rundfilterpatrone, die in das Gehäuse eine sog. Rohseite von einer Reinseite abdichtend trennt. Das entsprechend zu der Konizität der Rundfilterpatrone angepaßte Stützrohr, das insoweit gleichfalls konisch ausgebildet ist, ist einteilig mit einer der Gehäuseschalen hergestellt und die Rundfilterpatrone läßt sich als Filterelement nach Trennen der Gehäuseschalen für den Austausch gegen eine neue Filterpatrone von dem Stützrohr abziehen, so dass das Stützrohr insoweit als wiederverwendbares Bauteil der Filterelementlösung im Gehäuse verbleibt. Die beiden einander gegenüberliegenden Stirnseiten des insoweit plissierten Filtermaterials der Rundfilterpatrone sind in Endscheiben aus PUR-Schaum eingebettet, so dass zumindest nach außen hin das jeweilige Filtermaterialende durch die Endkappen in der Art von Ringsegmenten eingebettet und geschützt ist.

Durch die EP-A-1 259 304 ist eine gattungsgemäße Filtervorrichtung bekannt mit einem Filtergehäuse, einem Filterein- und -auslaß sowie einem konischen Filterelement, das einen Filterraum in zwei Teilräume unterteilt, wobei ein Teilraum vom Filtereinlaß zum Filterauslaß sich im Querschnitt konisch verjüngt und der andere Teilraum sich vom Filtereinlaß zum Filterauslaß im Querschnitt konisch verbreitert und wobei die Konizitäten der beiden Teilräume in gegensätzliche Richtungen stetig verlaufen. Dadurch, dass die Verjüngung des Querschnitts des einen Teilraumes in gleichem Maße stattfindet wie die Verbreiterung des Querschnitts des anderen Teilraumes, dass der eine Teilraum nach außen zur Umgebung und der andere Teilraum nach innen zur Mitte der Filtervorrichtung von jeweils einer zylindrischen Wand begrenzt ist und dass das Filterelement sich in Richtung vom Filterauslaß zum Filtereinlaß hin konisch verjüngt, ist aufgrund der in gleichem Maße sich verändernden Querschnitte der beiden Teilräume eine optimale Verweilzeitverteilung erreicht bei gleichmäßiger Strömungsgeschwindigkeit des insbesondere hoch viskosen Fluids, beispielsweise in Form von Polymerschmelze oder einer Polymerlösung.

Im Hinblick auf diese zu filtrierenden Fluide und die damit einhergehenden Drücke sind die wesentlichen Komponenten der Filtervorrichtung aus Edelstahlmaterialien aufgebaut, insbesondere auch im Umfang des Filtermaterials, das in Form einer Edelstahlmatte selbsttragend ausgebildet auch ohne Stützrohr für die Filtration eingesetzt werden kann. Findet ein Stützrohr Anwendung, liegt dieses bündig zwischen zwei Aufnahmeteilen der Filtervorrichtung an und ist an diese fixiert, beispielsweise über eine Schweißnaht. Aufgrund des Einsatzes von Edelstahlmaterialien sind sowohl das Filterelement als auch das Stützrohr ausgesprochen eigensteif ausgebildet, so dass das Entfernen der konischen Filtermatte von dem zugeordneten konischen Stützrohr für einen Austauschvorgang gegen neues Filtermaterial keine Probleme bereitet. Eine Übertragung dieser speziellen Konzeptlösung für Polymerschmelzen oder Polymerlösungen auf allgemeine Filtrationsaufgaben, wie der Filtrierung von Hydraulikölen, ist aber bereits aus Kostengründen nicht möglich.

Ausgehend von diesem Stand der Technik liegt der Erfindung die Aufgabe zugrunde, unter Beibehalten der Vorteile im Stand der Technik, nämlich Filtervorrichtungen zur Verfügung zu stellen, bei denen die Filterelemente neben einer hohen Differenzdruckstabilität sowie einer großen Schmutzaufnahmekapazität Filterfeinheiten für alle Reinheitsklassen aufweisen, diese dahingehend weiter zu verbessern, dass bei einem Austausch des Filterelementes zur Reduzierung der Kosten Teile des Filterelementes wiederverwendbar sind und dass ein dahingehender Austausch problemlos vonstatten geht. Eine dahingehende Aufgabe löst eine Filtervorrichtung mit den Merkmalen des Patentanspruches 1 in seiner Gesamtheit.

Dadurch, dass gemäß dem kennzeichnenden Teil des Patentanspruches 1 das jeweils weitere Aufnahmeteil mit einer ringflanschartigen Verlängerung innenumfangsseitig den jeweils freien Endbereich des Stützrohres abstützt und dass die Enden des Stützrohres auf dem jeweils weiteren Aufnahmeteil bündig anstoßen, das zu diesem Zweck mit einer ringförmigen Verbreiterung versehen ist, ist insbesondere in radialer Richtung der jeweilige freie Endbereich des Stützrohres derart abgestützt, dass eine nahtlose Führung für das zu tauschende Filtermarerial erreicht ist, so dass auf diese Art und Wiese ohne weitere Hemmnisse ein Trennen bzw. ein Wiederverbinden des Filtermaterials mit dem Stützrohr im Rahmen der hierfür notwendigen Ab- und Aufgleitbewegungen für das Filtermaterial möglich ist.

Aufgrund der vorgebbaren Konizität von Filtermaterial und Stützrohr kann das verschmutzte Filtermaterial ohne weiteres von dem Stützrohr abgezogen werden, so dass letzteres in Verbindung mit einem neu eingesetzten Filtermaterial wiederverwendbar ist. Durch die entsprechend konische Ausgestaltung von Stützrohr und Filtermaterial ist die dahingehende Trennung erleichtert, denn im Gegensatz zu den bekannten hohlzylindrisch aufgebauten Elementen kann es beim beschriebenen Trennvorgang nicht zu einem Verhaken des Filtermaterials in der Lochung (Perforierung) des Stützrohres kommen, was gegebenenfalls die dahingehende Trennung nicht nur erschwert, sondern insgesamt unmöglich machen würde.

Die dahingehenden Überlegungen gelten auch für das Aufschieben des neuen Filtermaterials auf das dann verbleibende Stützrohr aus der vorangegangenen Verwendung im Filtergehäuse der Filtervorrichtung. Bei einer bevorzugten Ausführungsform der erfindungsgemäßen Filtervorrichtung ist dabei vorgesehen, dass das jeweilige Filtermaterialende mit einem Aufnahmeteil versehen ist, das zwei Ringsegmente aufweist, die jeweils außen- und innenumfangsseitig das zugeordnete Filtermaterialende einfassen. Vorzugsweise erfolgt die dahingehende Einfassung in geklebter Weise, wobei das innenumfangsseitige Ringsegment unter Bildung einer Art Umfassungslippe in der Wandstärke deutlich reduziert ist. Auf diese Art und Weise kommt es ohne weitere Hemmnisse zu der beschriebenen Ab- und Aufgleitbewegung beim Trennen bzw. beim Wiederverbinden des Filtermaterials mit dem Stützrohr.

Wird die erfindungsgemäße Lösung bei einer sog. In-Tank-Verwendung eingesetzt, bei der Teile der Filtervorrichtung mit Filtergehäuse in einen Fluidtank hineinragen und dort verbleiben, kann das derart hineinragende Gehäuseteil inklusive Stützrohreinsatz und Filtermaterial aus der Filtervorrichtung entnommen werden, so dass zurückgehaltener und sedimentierter Schmutz nicht in den Tank gespült, sondern fachgerecht entsorgbar ist. Der Austausch des Filtermaterials gegen ein neues mit anschließendem Aufschiebvorgang auf das konische Stützrohr, läßt sich dann an einem geeigneten Wartungsplatz vor Ort durchführen.

Bei einer anderen bevorzugten Ausführungsform der erfindungsgemäßen Filtervorrichtung besteht aber auch die Möglichkeit, im Bereich des größten freien Querschnittes des Filtermaterials nebst Stützrohr, das zuordenbare Aufnahmeteil für das Filtermaterial mit einem ringförmigen Aufnahmeraum in der Art eines Schmutzfangkorbes zu versehen, so dass dann bei verbleibenden Gehäuseteilen an der hydraulischen Anlage das Filtermaterial bei Verschmutzung vom Stützrohreinsatz gezogen werden kann, wobei dann etwaig zurückgehaltener und sedimentierter Schmutz sich im genannten, angeformten Schmutzfangkorb ablagern läßt und nicht in die hydraulische Anlage, beispielsweise in den Tank, eingespült wird, was ansonsten zu Betriebsstörungen und Ausfällen der gesamten Hydroanlage führen kann.

Weitere vorteilhafte Ausgestaltungen der erfindungsgemäßen Filtervorrichtung sind Gegenstand der sonstigen Unteransprüche.

Im folgenden wird die erfindungsgemäße Filtervorrichtung anhand zweier Ausführungsbeispiele nach der Zeichnung näher erläutert. Dabei zeigen in prinzipieller und nicht maßstäblicher Darstellung die
- Fig.1: einen Längsschnitt durch eine erste Ausführungsform der Filtervorrichtung in der Art einer sog. In-Tank-Lösung und die
- Fig.2: einen entsprechend der Fig.1 gezeichneten Längsschnitt durch eine zweite Ausführungsform der erfindungsgemäßen Filtervorrichtung, bei der bei Austauschvorgang des Filtermaterials relevante Gehäuseteile an der Hydroanlage verbleiben.

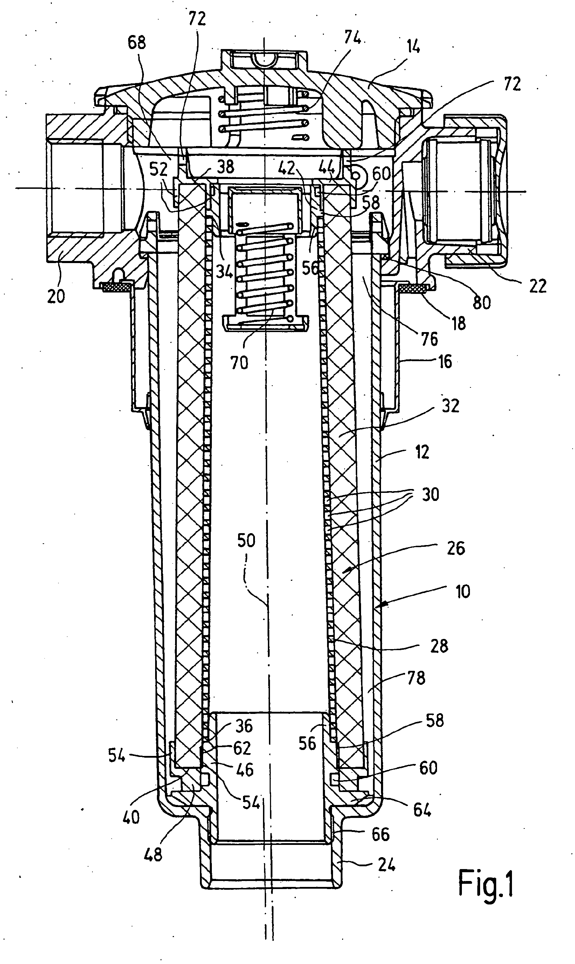

Die Filtervorrichtung nach der Fig.1 weist ein als Ganzes mit 10 bezeichnetes Gehäuse auf. Das dahingehende Gehäuse 10 besteht aus mindestens zwei miteinander lösbar zu verbindenden Gehäuseteilen 12,14, wobei das erste Gehäuseteil 12 in der Art eines Filtertopfes ausgebildet ist, und das zweite Gehäuseteil 14 bildet eine Art Deckel aus. Das Gehäuseteil 12 ist in Blickrichtung auf die Fig.1 gesehen an seinem oberen Ende von einem ringförmigen Einsatzflansch 16 umfaßt, der für einen Einsatz in einen nicht näher dargestellten Fluidtank an seinem oberen Ende eine ringförmige Auflagedichtung 18 aufweist. Als weitere Gehäuseteile des Gehäuses 10 grenzen in Blickrichtung auf die Fig.1 gesehen auf der linken Seite ein Einströmanschluß 20 sowie auf der rechten Seite eine verschließbare Anschlußstelle 22 an, beispielsweise für den Anschluß einer nicht näher dargestellten Verschmutzungsanzeige, die beispielsweise auf der Basis der Differenzdruckmessung arbeitet. An seiner Unterseite mündet das Gehäuse 10 in einen Ausströmanschluß 24.

Das genannte Gehäuse 10 nimmt in seinem Inneren ein als Ganzes mit 26 bezeichnetes Filterelement auf. Das dahingehende Filterelement 26 weist in bekannter Weise an seiner Innenseite ein Stützrohr 28 mit einer Vielzahl von Durchlaßstellen 30 in der Art einer Perforierung auf. Das Stützrohr 28 wird von einem Filtermaterial 32 umfaßt, das vorzugsweise aus mehreren Lagen besteht, die einen plissierten Filtermattenaufbau ergeben. Die dahingehende Ausgestaltung eines Filterelementes ist im Stand der Technik nachweisbar, so dass an dieser Stelle hierauf nicht mehr näher eingegangen wird. In Blickrichtung auf die Fig.1 gesehen münden das obere Ende 34 des Stützrohres 28 als auch das obere Ende 38 des Filtermaterials 32 jeweils in ein zuordenbares Aufnahmeteil 42 bzw. 44. Ebenso münden das untere Ende 36 des Stützrohres 28 sowie das untere Ende 40 des Filtermaterials 32 in untere Aufnahmeteile 46 bzw. 48.

Damit das Filtermaterial 32 sich in einer Richtung entsprechend der Längsrichtung 50 des Gehäuses 10 vom Stützrohr 28 trennend abziehen läßt, sind in dieser Abziehrichtung sowohl das Stützrohr 28 als auch gleichermaßen das Filtermaterial 32 mit einer vorgebbaren Konizität (vgl. Fig.1) versehen. Aufgrund der konischen Ausgestaltung des Stützrohres 28 nebst Filtermaterial 32 in Form einer Filtermatte ist eine reibungsfreie Trennung von Filtermaterial 32 zum zuordenbaren Stützrohr 28 möglich, ohne dass es zu einem Verhaken des empfindlichen Filtermaterials 32 in der Perforierung 30 des Stützrohres 28 kommen könnte. Insoweit ist auch ein Aufschiebevorgang eines neuen unverbrauchten Filtermaterials 32 auf das Stützrohr 28 möglich, wobei die genannte Konizität einen definierten Aufschiebevorgang der genannten Art sinnfällig unterstützt und entsprechende Automatisiervorgänge beim Zusammenbau des Filterelementes 26 erleichtern hilft. Das verbleibende Stützrohr 28 kann unmittelbar, aber auch erst nach einigen Austauschvorgängen, für das Filtermaterial 32 abgereinigt werden, beispielsweise mittels entsprechender Abreinigungsmedien und/oder in einem hierfür geeigneten Ultraschallbad (nicht dargestellt).

Wie die Fig.1 des weiteren zeigt, ist sowohl das obere Aufnahmeteil 44 als auch das untere Aufnahmeteil 48 des Filtermaterials 32 mit zwei Ringsegmenten 52 sowie 54 versehen. Die jeweiligen Ringsegmente 52,54 fassen dabei jeweils außen- und innenumfangsseitig das zugeordnete Filtermaterialende 38 bzw. 40 ein. Die entsprechenden Aufnahmeteile 44,48 für das Filtermaterial 32 bilden dergestalt Endkappen aus und es ergibt sich ein nahtloser Übergang zwischen dem Filtermaterial 32 und der derart gebildeten Abstützung durch die anformbaren Endkappen in Form des oberen Aufnahmeteils 44 bzw. des unteren Aufnahmeteils 48. Der genannte nahtlose Übergang läßt sich durch ein übliches Spiegelschweißverfahren, über einen Formverguß, eine Klebstoffverbindung od. dgl. erreichen. Aufgrund der Elastizität des eingesetzten Filtermaterials 32 besteht insbesondere die Möglichkeit, dass die beiden Ringsegmente 52,54 eines Aufnahmeteils 44 bzw. 48 das zugeordnete Filtermaterial 32 an dieser Stelle klemmend einfassen.

Die Enden 34,36 des Stützrohres 28 sind, wie bereits dargelegt, in einem hierzu eigenständigen Aufnahmeteil 42 bzw. 46 gehalten. Ferner baut in Längsrichtung 50 des Gehäuses 10 gesehen das Filtermaterial 32 mit seinen Aufnahmeteilen 44,48 axial länger auf als das innen liegende Stützrohr 28. Ferner ist vorgesehen, dass das jeweils weitere Aufnahmeteil 42,46 mit einer ringflanschartigen Verlängerung 56 innenumfangsseitig den jeweils freien Endbereich des Stützrohres 28 abstützt, wobei die Enden 34,36 des Stützrohres 28 auf dem jeweiligen weiteren Aufnahmeteil 42,46 bündig anschließen, das zu diesem Zweck mit einer ringförmigen Verbreiterung 58 versehen ist. Insbesondere dient die in Blickrichtung auf die Fig.1 gesehen obige ringförmige Verbreiterung 58 des oberen weiteren Aufnahmeteils 42 der Abstützung des benachbarten Filtermaterials 32 in radialer Richtung, so dass dergestalt ein nahtloser Übergang oder eine nahtlose Führung zwischen dem Filtermaterial 32 in Form der Filtermatte und dem oberen weiteren Aufnahmeteil 42 gewährleistet ist. Auf der benachbart gegenüberliegenden Seite bildet die dahingehend stufenförmig abgesetzte, ringförmige Verbreiterung 58 eine Anlagefläche für das freie Ende des innenumfangsseitig angeordneten oberen Ringsegmentes 52 aus. Sofern ausgehend von der ringförmigen Verbreiterung 58 das obere weitere Aufnahmeteil 42 sowie das untere weitere Aufnahmeteil 46 verlängert ist, ergibt sich dergestalt ein Ringkanal 60 für die Aufnahme eines geeigneten Dichtmittels, insbesondere in Form eines üblichen O-Dicht-ringes (nicht dargestellt). Durch die Integration der Dichtmittel in den weiteren Aufnahmeteilen 42,46 für das Stützrohr 28 ergibt sich eine sichere Abdichtung, die im übrigen die Ab- und Aufziehbewegung des Filtermaterials 32 auf das Stützrohr 28 mit seinen Aufnahmeteilen 42,46 nicht behindert. Alternativ kann bei einer nicht näher dargestellten Ausführungsform auch vorgesehen sein, die Endkappen, also die Aufnahmeteile 44 und 48 des Filtermaterials 32, mit einem angeformten Dichtungsmaterial zu versehen.

Zumindest im Bereich des größten freien Querschnitts von Filtermaterial 32 und Stützrohr 28 - also am unteren Ende nach der Fig.1 - ist das Ringsegment 54 des unteren Aufnahmeteils 48, das bei einer Trennung von Filtermaterial 32 und Stützrohr 28 an dem weiteren Aufnahmeteil 46 und dem Stützrohr 28 zumindest an deren freien Endbereich abgleitet, bezogen auf seine Wandstärke gegenüber dem äußeren korrespondierenden Ringsegment 54 des Aufnahmeteils 48, reduziert. Hierdurch ergibt sich für das innenumfangsseitig angeordnete untere Ringsegment 54 eine Art Abgleitlippe 62, die aufgrund ihrer Elastizität in Verbindung mit dem elastischen Filtermaterial die Auf- und Abschiebevorgänge für das Filtermaterial 32 deutlich erleichtert. Ferner sitzt in diesem Bereich auf einer ringförmig verbreiterten Anlagefläche 64 des weiteren unteren Aufnahmeteils 46, das freie untere Ende des unteren Aufnahmeteils 48 für das Filtermaterial 32 auf, wobei das weitere Aufnahmeteil 46 über eine Gewindestrecke 66 am unteren Ende lösbar mit dem Filtergehäuse 10 im Bereich des Ausströmanschlusses 24 verbunden ist.

Beim Betrieb der erfindungsgemäßen Filtervorrichtung nach der Fig.1 strömt unfiltriertes Fluid über den Einströmanschluß 20 und den Zuströmkanal 68 in das Innere der Filtervorrichtung, wobei im normalen Filtrierbetrieb von außen nach innen das Filtermaterial 32 durchströmt wird und anschließend die Perforierung 30 des Stützrohres 28. Abgereinigtes Fluid gelangt dann über das Innere des Stützrohres 28 und den Ausströmanschluß 24 zurück in die Hydroanlage, hier in Form eines nicht näher dargestellten Fluidtanks. Ist das Filtermaterial 32 zugesetzt, kann der Betrieb der Hydroanlage über ein Bypassventil 70 sichergestellt werden, das in das obere weitere Aufnahmeteil 42 des Stützrohres 28 integriert ist. Dergestalt wird über das Bypassventil 70 der Durchgang durch das Filtermaterial 32 umgangen.

Am oberen Ende des Filterelementes 26, also im Bereich der oberen Endkappe in Form des oberen Aufnahmeteils 44, ist dieses mit zwei Anlagestegen 72 versehen, gegen die die Unterseite des Gehäusedeckels 14 drückt, der im übrigen auf seiner Innenseite mit einer Druckfeder 74 versehen ist, die, was nicht näher dargestellt ist, auf die Oberseite des Filterelementes 26 einwirkt, um dieses dergestalt in seiner Filtrierlage gemäß der Darstellung nach der Fig.1 zu halten. Aufgrund der Konizität des Filterelementes 26 bei ansonsten zylindrisch ausgebildetem Gehäusetopf 12, ergibt sich insofern im Durchflußbereich für das unfiltrierte Fluid eine entgegengesetzt angeordnete Konizität, die am oberen Eingangsbereich der Filtervorrichtung und mithin am Eintritt zu einem großen Ringspalt 76 führt und am unteren Ende zu einem kleinen Ringspalt 78. Der große Ringspalt 76 am Eintritt der Vorrichtung hat den Vorteil, dass es zu hohen Durchflußleistungen kommt und der Ringspalt 78 am Filterboden führt zu einem geringer werdenden Durchfluß, was insgesamt gesehen energetisch günstiger ist und zu höheren Durchflußleistungen führt, als wenn wie bei den bekannten Lösungen in konzentrischer Anordnung die Gehäuseteile sowie die Filterelementteile ausschließlich zylindrisch ausgeführt sind.

Für einen Austauschvorgang wird zunächst der Gehäusedeckel 14 vom Gehäusetopf 12 entfernt und dann der Gehäusetopf 12 mit Filterelement 26 als Ganzes ausgehoben, wobei der Einsatzflansch 16 nebst den weiteren Gehäuseteilen 20,22 am nicht näher dargestellten Tank bzw. dessen Wandung verbleibt. Zurückgehaltener und sedimentierter Schmutz kann dann dergestalt nicht in den Tank gelangen, sondern wird über den Gehäusetopf 12 aus der Vorrichtung fachgerecht herausgebracht und entsorgt. Hierzu ist der Gehäusetopf 12 über eine Ringdichtung 80 auf den sonstigen Gehäuseteilen 20,22 aufgelagert. Anschließend kann die Trennung von Filtermaterial 32 zu Stützrohr 28 geschehen, indem das Filtermaterial 32 mit seinen Aufnahmeteilen 44,48 von dem Stützrohr 28 nebst zuordenbaren Aufnahmeteilen 42, 46 abgezogen wird. Ein neues Filtermaterial 32 wird dann auf die konische Anordnung von Stützrohr 28 mit Aufnahmeteilen 42, 46 wieder aufgeschoben und nach Einsatz des Filterelementes 26 als Ganzes in den Gehäusetopf 12 läßt sich in umgekehrter Reihenfolge die Filtervorrichtung für einen erneuten Einsatzvorgang wieder komplementieren.

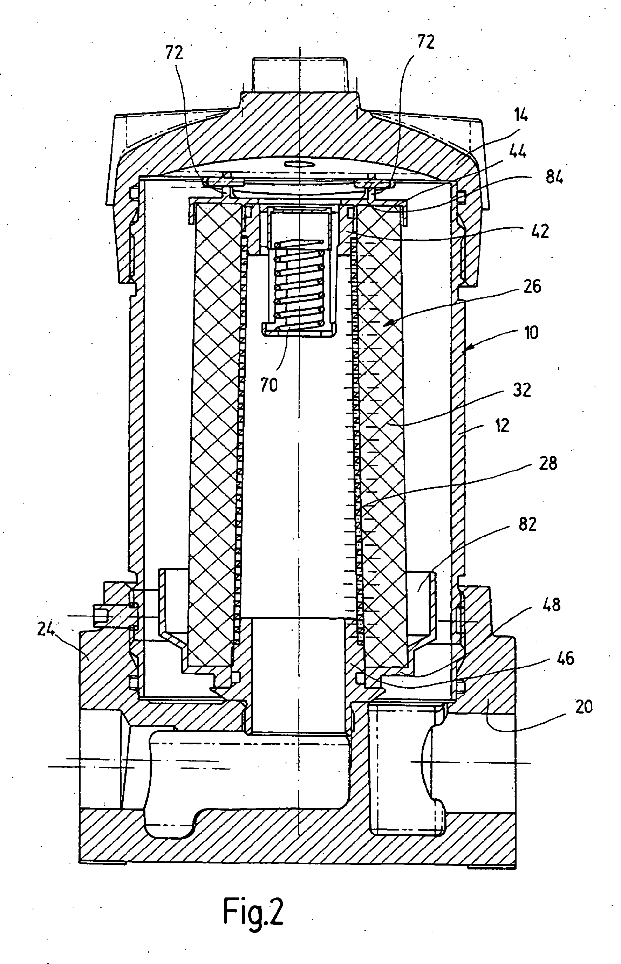

Die weitere Ausführungsform nach der Fig.2 entspricht vom prinzipiellen Aufbau her der Ausführungsform nach der Fig.1, so dass insoweit für dieselben Bauteile, wie nach der Fig.1, auch dieselben Bezugszeichen verwendet werden und die hierzu bisher getroffenen Ausführungen gelten auch insoweit für die Ausführungsform nach der Fig.2, die nur noch insofern erläutert wird, als sie sich wesentlich von der Ausführungsform nach der Fig.1 unterscheidet.

Bei der Ausführungsform nach der Fig.2 befindet sich der Einströmanschluß 20 am unteren Ende der Filtervorrichtung und ist zusammen mit dem Ausströmanschluß 24 in einer Art Anschlußblock aufgenommen, der von seiner Oberseite her mit dem Gehäusetopf 12 verbindbar ist. Bei der Ausführungsform nach der Fig.2 ist im Bereich des größten freien Querschnittes des Filtermaterials 32, also am unteren Ende, das zuordenbare Aufnahmeteil 48 mit einem ringförmigen Aufnahmeraum 82 versehen, der als eine Art Schmutzfangkorb dient. Bei der modifizierten Ausführungsform nach der Fig.2 wird für einen Austauschvorgang des Filtermaterials 32 wiederum der Gehäusedeckel 14 vom Gehäusetopf 12 entfernt und das Filtermaterial 32 wird mit seinem oberen Aufnahmeteil 44 sowie mit seinem unteren Aufnahmeteil 48 von dem Stützrohr 28 mit seinen Aufnahmeteilen 42 und 46 abgezogen, wobei ein Bügelteil 84, das die oberen Anlagestege 72 des oberen Aufnahmeteils 44 durchgreift, hochstellbar und dergestalt die Abziehbewegung von Hand erleichtert. Ein entsprechend ausgestattetes Filtermaterialteil 32 läßt sich dann in umgekehrter Reihenfolge, wie dargestellt, einwechseln. Ferner ermöglicht der Aufnahmeraum 82 die Zurückhaltung sedimentierten Schmutzes, der dergestalt aus der Filtervorrichtung entfernbar ist und nicht ungewollt in die Hydroanlage gelangen kann. Besonders vorteilhaft haben sich bei beiden Ausführungsformen für einen Auswechselvorgang des Filtermaterials 32 Konizitäten erwiesen, die im Bereich von 2° bis 10°, insbesondere bei etwa 5° liegen.

## Patentansprüche

1. Filtervorrichtung mit einem Gehäuse (10) aus mindestens zwei miteinander lösbar zu verbindenden Gehäuseteilen (12,14), das ein Filterelement (26) aufnimmt, das ein Stützrohr (28) aufweist sowie ein das Stützrohr (28) umgebendes Filtermaterial (32), wobei die Enden (34,36;38,40) von Stützrohr (28) und Filtermaterial (32) in mindestens ein Aufnahmeteil (42,46;44,48) münden, wobei das Filtermaterial (32) sich in einer Richtung (50) vom Stützrohr (28) trennend abziehen läßt, wobei in dieser Abziehrichtung (50) sowohl das Stützrohr (28) als auch gleichermaßen das Filtermaterial (32) mit einer vorgebbaren Konizität versehen sind, wobei das jeweilige Filtermaterial-ende (38,40) mit einem Aufnahmeteil (44,48) versehen ist, das zwei Ringsegmente (52,54) aufweist, die jeweils außen- und innenumfangsseitig das zugeordnete Filtermaterialende (38,40) einfassen, wobei die Enden (34,36) des Stützrohres (28) in einem weiteren Aufnahmeteil (42,46) gehalten sind, und wobei in Längsrichtung (50) des Gehäuses (10) gesehen das Filtermaterial (32) mit seinen Aufnahmeteilen (44,48) axial länger aufbaut als das innen liegende Stützrohr (28), **dadurch gekennzeichnet, dass** das jeweils weitere Aufnahmeteil (42,46) mit einer ringflanschartigen Verlängerung (56) innenumfangsseitig den jeweils freien Endbereich des Stützrohres (28) abstützt und dass die Enden (34,36) des Stützrohres (28) auf dem jeweils weiteren Aufnahmeteil (42,46) bündig anstoßen, das zu diesem Zweck mit einer ringförmigen Verbreiterung (58) versehen ist.

2. Filtervorrichtung nach Anspruch 1, **dadurch gekennzeichnet, dass** die beiden Ringsegmente (52,54) mindestens eines Aufnahmeteils (44,48) das zugeordnete Filtermaterial (32) klemmend einfassen.

3. Filtervorrichtung nach Anspruch 1 oder 2, **dadurch gekennzeichnet, dass** zumindest im Bereich des größten freien Querschnittes von Filtermaterial (32) und Stützrohr (28), das Ringsegment (54) des Aufnahmeteils (48), das bei einer Trennung von Filtermaterial (32) und Stützrohr (28) an dem weiteren Aufnahmeteil (46) und dem Stützrohr (28) zumindest an deren freien Endbereich abgleitet, bezogen auf seine Wandstärke gegenüber dem äußeren Ringsegment (54) des Aufnahmeteils (48) reduziert ist.

4. Filtervorrichtung nach Anspruch 3, **dadurch gekennzeichnet, dass** zumindest im Bereich des größten freien Querschnittes von Filtermaterial (32) und Stützrohr (28), das Aufnahmeteil (48) auf einer ringförmigen Anlagefläche (64) des weiteren Aufnahmeteils (46) aufsitzt, das lösbar mit dem Gehäuse (10) verbunden ist.

5. Filtervorrichtung nach Anspruch 3 oder 4, **dadurch gekennzeichnet, dass** im Bereich des größten freien Querschnittes des Filtermaterials (32) das Aufnahmeteil (48) einen ringförmigen Aufnahmeraum (82) als eine Art Schmutzfangkorb aufweist.

6. Filtervorrichtung nach einem der Ansprüche 1 bis 5, **dadurch gekennzeichnet, dass** innerhalb eines Zuströmkanals (68) des Gehäuses (10) für unfiltriertes Fluid das weitere Aufnahmeteil (42) mit einem Bypassventil (70) versehen ist.

## Claims

1. A filter device having a housing (10), comprising at least two housing parts (12, 14) to be connected to one another releaseably, which accommodates a filter element (26) that has a support tube (28) and a filter material (32) surrounding the support tube (32), the ends (34, 36; 38, 40) of the support tube (28) and the filter material (32) opening out into at least one retaining part (42, 46; 44, 48), it being possible to pull the filter material (32) off of the support tube (28) in one direction (50) such as to separate it, in this pulling off direction (50) both the support tube (28) and likewise the filter material (32) being provided with a pre-specifiable conicity, the respective filter material end (38, 40) being provided with a retaining part (44, 48) which has two ring segments (52, 54) which respectively enclose the assigned filter material end (38, 40) on the outside and the inside circumference side, the ends (34, 36) of the support tube (28) being held in a further retaining part (42, 46), and, as viewed in the longitudinal direction (50) of the housing (10) the filter material (32) with its retaining parts (44, 48) being longer in structure axially than the inside support tube (28), **characterised in that** the respective further retaining part (42, 46) with an annular flange-type extension (56) supports the respective free end region of the support tube (28) on the inner circumference side, and that the ends (34, 36) of the support tube (28) abut, flush, the respective further retaining part (42, 46) which is provided for this purpose with an annular broadening (58).

2. The filter device according to Claim 1, **characterised in that** the two ring segments (52, 54) of at least one retaining part (44, 48) enclose the assigned filter material (32) such as to clamp it.

3. The filter device according to Claim 1 or 2, **characterised in that** at least in the region of the largest free cross-section of the filter material (32) and the support tube (28), the ring segment (54) of the retaining part (48), which upon separation of the filter material (32) and the support tube (28) on the further retaining part (46) and the support tube (28) slides off at least on the free end region of the latter, is reduced in relation to its wall thickness opposite the outer ring segment (54) of the retaining part (48).

4. The filter device according to Claim 3, **characterised in that** at least in the region of the largest free cross-section of the filter material (32) and the support tube (28), the retaining part (48) sits on an annular bearing surface (64) of the further retaining part (46) which is releaseably connected to the housing (10).

5. The filter device according to Claim 3 or 4, **characterised in that** in the region of the largest free cross-section of the filter material (32) the retaining part (48) has an annular retaining space (82) as a type of dirt trap basket.

6. The filter device according to any of Claims 1 to 5, **characterised in that** within a delivery flow channel (68) of the housing (10) for unfiltered fluid the further retaining part (42) is provided with a bypass valve (70).

## Revendications

1. Dispositif de filtration comprenant un corps (10), qui est composé d'au moins deux parties (12, 14) de corps se reliant l'une à l'autre de manière amovible, qui reçoit un élément (26) filtrant, qui a un tube (28) d'appui ainsi qu'un matériau (22) filtrant entourant le tube (28) d'appui, des extrémités (34, 36 ; 38, 40) du tube (28) d'appui et du matériau (32) filtrant débouchant dans au moins une partie (42, 44 ; 46, 48) de réception, le matériau (32) filtrant pouvant être retiré dans une direction (50) en se séparant du tube (28) d'appui, dans lequel, dans cette direction (50) de retrait, tant le tube (28) d'appui qu'également de la même façon le matériau (32) filtrant sont munis d'une conicité pouvant être prescrite, l'extrémité (38, 40) respective du matériau filtrant étant munie d'une partie (44, 48) de réception, qui a deux segments (52, 54) annulaires, qui enchâssent respectivement du côté périphérique extérieur et du côté périphérique intérieur l'extrémité (38, 40) associée du matériau filtrant, l'extrémité (34, 36) du tube (28) d'appui étant maintenue dans une autre partie (42, 46) de réception, et dans lequel, considéré dans la direction (50) longitudinale du corps (10), le matériau (32) filtrant est par ses parties (44, 48) de réception plus long axialement que le tube (28) d'appui se trouvant à l'intérieur, **caractérisé en ce que** respectivement une autre partie (42, 46) de réception ayant un prolongement (56) en forme de bride annulaire soutient du côté périphérique intérieur la partie d'extrémité libre respectivement du tube (28) d'appui et **en ce que** les extrémités (34, 36) du tube (28) d'appui sont à affleurement avec respectivement l'autre partie (42, 46) de réception, qui est pourvue à cet effet d'un élargissement (58) annulaire.

2. Dispositif de filtration suivant la revendication 1, **caractérisé en ce que** les deux segments (52, 54) annulaires d'au moins une partie (44, 48) de réception enchâssent en le serrant le matériau (32) filtrant associé.

3. Dispositif de filtration suivant la revendication 1 ou 2, **caractérisé en ce que**, au moins dans la zone de la plus grande section transversale libre du matériau (32) filtrant et du tube (28) d'appui, le segment (54) annulaire de la partie (48) de réception, qui, lors d'une séparation du matériau (32) filtrant et du tube (28) d'appui, glisse sur l'autre partie (46) de réception et sur le tube (28) d'appui au moins sur sa zone d'extrémité libre, a une épaisseur de paroi réduite par rapport au segment (54) annulaire extérieur de la partie (48) de réception.

4. Dispositif de filtrations suivant la revendication 3, **caractérisé en ce que**, au moins dans la zone de la section transversale libre la plus grande du matériau (32) filtrant et du tube (28) d'appui, la partie (48) de réception repose sur une surface (64) annulaire de contact de l'autre partie (46) de réception, partie (46) qui est reliée de manière amovible au corps (10).

5. Dispositif de filtration suivant la revendication 3 ou 4, **caractérisé en ce que**, dans la zone de la section transversale libre la plus grande du matériau (32) filtrant, la partie (48) de réception a une chambre (82) annulaire de réception sous la forme d'un panier de collecte d'impuretés.

6. Dispositif de filtration suivant l'une des revendications 1 à 5, **caractérisé en ce que**, à l'intérieur d'un canal (68) du corps (10) pour l'admission de fluide non filtré, l'autre partie (42) de réception est munie d'une vanne (70) de dérivation.
